# EUROPEAN PATENT SPECIFICATION

(11) **EP 3 027 681 B1**
(45) Date of publication and mention of the grant of the patent: **03.07.2019**
(21) Application number: 14831401.6
(22) Date of filing: 29.07.2014
(51) Int. Cl.: B29C 47/00, B29C 47/06, B29C 47/10, B29C 47/40, B29C 47/64, B29C 47/88, B29C 47/92, B29B 11/10, B29B 7/00, B29D 7/01, C08J 3/20, C08L 23/00, C08L 101/00, B29K 23/00, B29K 105/00, B29K 105/26, B29L 7/00, B29K 25/00, B29K 101/12

(54) **SUSTAINABLE POLYMER FILMS**
DAUERHAFTE POLYMERFILME
FILMS POLYMÈRES DURABLES

(30) Priority: 31.07.2013 US 201361860630 P; 25.06.2014 US 201414315095
(43) Date of publication of application: 08.06.2016
(73) Proprietor: Kimberly-Clark Worldwide, Inc., Neenah, Wisconsin 54956 (US)
(72) Inventor: WANG, James, Hongxue, Appleton, Wisconsin 54911 (US); THOMPSON, Brent, Merrik, Oshkosh, Wisconsin 54904 (US); WIDEMAN, Gregory, James, Menasha, Wisconsin 54952 (US)
(74) Representative: Dehns
(86) International application number: PCT/IB2014/063528
(87) International publication number: WO 2015/015427

(56) References cited:
- JP-A- H07 126 457
- JP-A- 2004 182 957
- JP-A- 2012 040 868
- KR-A- 20090 021 365
- KR-A- 20100 018 520
- US-A- 5 128 212
- US-A- 5 855 975
- US-A1- 2008 289 251

## Description

### FIELD OF THE DISCLOSURE

The present disclosure relates to compositions and methods for making films, the compositions including virgin polymers and recycled material obtained from an industrial waste stream.

### BACKGROUND OF THE DISCLOSURE

The use of plastic film has become a mainstay for not only packaging consumer products, especially those that have a higher moisture content, but also for use within consumer products (e.g. diapers, feminine napkins, and adult incontinence products). Plastic films made from virgin polymers have a relatively high environmental foot print, otherwise referred to as a high "eCO2". (The eCO2 for a given material is determined by a material's life cycle assessment (LCA) wherein a method of accounting all the equivalent carbon dioxide emissions through the entire life cycle of making the material, carbon equivalents are used to obtain the overall carbon footprint.) This is primarily due to the inherent high energy input and high carbon dioxide emissions to produce the virgin polymers, and the resulting green-house gas emssions.

One solution to reduce the eCO₂ values of plastic film is to substitute a portion of the virgin polymers with recycled content. Such material may consist of post-consumer recycled (PCR) plastics from waste. However, even though the addition of recycled content reduces cost, relying on post-consumer waste as a material supply is not necessarily advantageous because the physical properties of the resulting films may vary greatly and may not be adequate. Often, these PCR plastics have undesirable contamination. Contamination may cause film defects, rendering the film unusable for an intended purpose. Films used as packaging or in products need to be able to
withstand a certain level of mechanical stress and abrasion encounterted during shipping and consumer use, without failing.

A need exists for a polymer composition that consistently exhibits physical and mechanical properties within a desired range. Desirably, the mechanical properties are comparable to or possibly better than 100% virgin polymers. Further, there is a need for polymer compositions that are sustainable in that they are made from wastes or by-products, and not made solely from virgin materials. In addition, there is a need for polymer compositions that produce films that are less costly than compositions of 100% virgin materials or recycled films containing certain PCR materials. Currently, polyethylene PCR materials can cost almost as much as if not more than virgin polyethylene materials used for packaging, offering little to no cost advantage when using PCR as a substitue material.

### SUMMARY

The present disclosure in accordance with one aspect pertains to a method for forming a sustainable thermoplastic film. The method includes the following steps: forming a mixture by supplying a virgin polymer comprising polyethylene and a post-industrial-recycled material (PIR) to a feed section of an extruder, wherein the PIR comprises a thermoplastic, elastomeric-polymer and a spunbond component; and melt processing the mixture within the extruder and extruding the mixture through a die to form the film, wherein the film has a thickness of 100 micrometers or less.

Other features and aspects of the present disclosure are discussed in greater detail below.

### BRIEF DESCRIPTION OF FIGURES

A full and enabling disclosure of the present disclosure, including the best mode thereof, directed to one of ordinary skill in the art, is set forth more particularly in the remainder of the specification, which makes reference to the appended figures in which:
**Fig. 1** is a partially broken away side view of an extruder that may be used in one embodiment of the present disclosure;
**Figs. 2A** and **2B** are schematic illustrations of two embodiments of a multilayered film that may be made according to the present disclosure;
**Fig. 3** is a schematic illustration of one embodiment of a method for forming a film in accordance with the present disclosure;
**Figs. 4A** and **4B** are graphics showing the peak stress in the machine-direction as a function of SBL;
**Figs. 5A** and **5B** are graphics showing the peak stress in the cross-machine direction as a function of SBL;
**Figs. 6A** and **6B** are graphics showing the strain at break in the machine-direction as a function of SBL;
**Figs. 7A** and **7B** are graphics showing the strain at break in the cross-machine direction as a function of SBL;
**Figs. 8A** and **8B** are graphics showing the modulus in the machine-direction as a function of SBL;
**Figs. 9A** and **9B** are graphics showing the modulus in the cross-machine direction as a function of SBL;
**Figs. 10A** and **10** **B** are graphics showing the toughness in the machine-direction as a function of SBL;
**Fig. 11A** and **11B** are graphics showing the toughness in the cross-machine direction as a function of SBL;
**Fig. 12A** is a plan view of an exemplary absorbent article including the film of the present disclosure; and

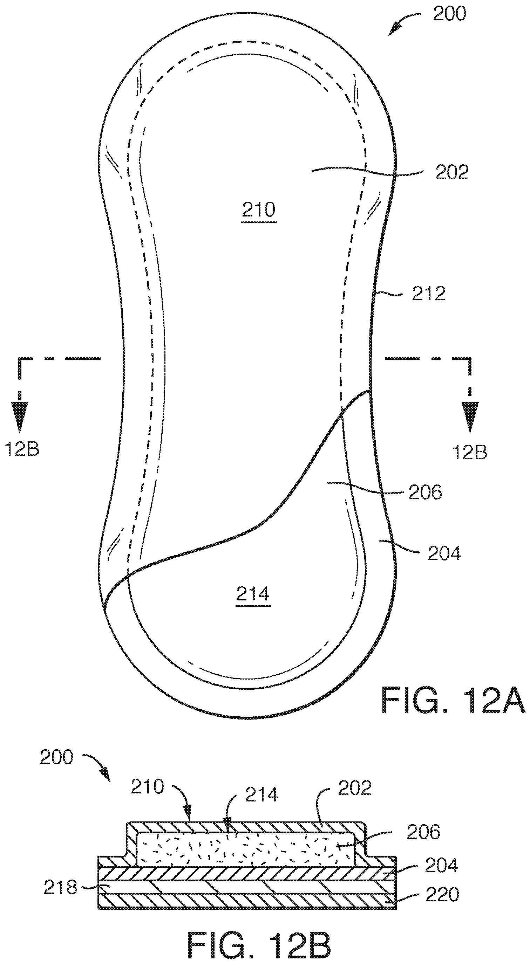

**Fig. 12** **B** is a schematic cross-section of the absorbent article of Fig. 12 A taken at line 12B-12B.

The use of reference characters in the present specification and drawings is intended to represent same or analogous features or elements of the disclosure.

### DETAILED DESCRIPTION

### Section I. - Definitions

"Adhesive spun-bond film laminate" (otherwise referred to as "aSFL") as used herein is a laminate of a nonwoven facing and a breathable polyethylene film with an adhesive between the nonwoven facing and polethylene films. One example of the nonwoven facing is a polypropylene spunbond. Another example is a polyethylene breathable film made from a calcium-carbonate-filled polyethylene stretched in the machine direction to create a microporous film that is breathable to allow moisture to pass through the film. One example of aSFL is disclosed in U.S. Patent Number 7,812,214.

"Articles" as used herein may refer to any film, regardless of its end use.

"Elastomer" as used herein refers to a thermoplastic elastomeric polymer. Such a polymer has a low Young's modulus, high recoverable deformation, and high yield strain as compared with other polymer materials.

" Post industrial recycle" (otherwise referred to as "PIR") as used herein is a material obtained from the manufacture of products containing stretch-bond laminate and/or adhesive spun-bond laminate as defined herein.

"Meltblown" refers to fibers formed by extruding a molten thermoplastic material through a plurality of fine, usually circular, die capillaries as molten threads or filaments into converging high velocity gas (e.g., air) streams, generally heated, which attenuate the filaments of molten thermoplastic material to reduce their diameters. Thereafter, the meltblown fibers are carried by the high velocity gas stream and are deposited on a collecting surface or support to form a web of randomly dispersed meltblown fibers. Such a process is disclosed, for example, in U.S. Patent 3,849,241 to Butin et al. Meltblowing processes can be used to make fibers of various dimensions, including macrofibers (with average diameters from about 40 to about 100 microns), textile-type fibers (with average diameters between about 10 and 40 microns), and microfibers (with average diameters less than about 10 microns). Meltblowing processes are particularly suited to making microfibers, including ultra-fine microfibers (with an average diameter of about 3 microns or less). A description of an exemplary process of making ultra-fine microfibers may be found in, for example, U.S. Patent No. 5,213,881 to Timmons et al. Meltblown fibers may be continuous or discontinuous and are generally self bonding when deposited onto a collecting surface.

"Nonwoven" and "nonwoven web" refer to materials and webs of material that are formed without the aid of a textile weaving or knitting process. For example, nonwoven materials, fabrics or webs have been formed from many processes such as, for example, meltblowing processes, spunbonding processes, air laying processes, coform processes, and bonded carded web processes.

"Spunbonded fibers" refers to small diameter fibers which are formed by extruding molten thermoplastic material as filaments from a plurality of fine, usually circular capillaries of a spinneret with the diameter of the extruded filaments then being rapidly reduced to fibers as by, for example, in U.S. Patent No. 4,340,563 to Appel et al.; U.S. Patent No. 3,692,618 to Dorschner et al.; U.S. Patent No. 3,802,817 to Matsuki et al.; U.S. Patent Nos. 3,338,992 and 3,341,394 to Kinney; U.S. Patent No. 3,502,763 to Hartman; and U.S. Patent No. 3,542,615 to Dobo et al. Spunbond fibers are generally continuous and have diameters generally greater than about 7 microns, more particularly, between about 10 and about 20 microns.

"Spun-bonded laminate" ("SBL") refers to a composite material having at least two layers in which one layer is a gatherable layer and the other layer is an elastic layer. The layers are joined together when the elastic layer is extended from its original condition so that upon relaxing the layers, the gatherable layer is gathered. Such a multilayer composite elastic material may be stretched to the extent that the nonelastic material gathered between the bond locations allows the elastic material to elongate. One type of stretch bonded laminate is disclosed, for example, by U.S. Patent No. 4,720,415 to Vander Wielen et al. Other composite elastic materials are disclosed in U.S. Patent No. 4,789,699 to Kieffer et al.; U.S. Patent No. 4,781,966 to Taylor; U.S. Patent Nos. 4,657,802 and 4,652,487 to Morman; and 4,655,760 to Morman et al.; U.S. Patent No. 5,366,793 to Fitts Jr. et al.; U.S. Patent No. 5,385,775 to Wright; U.S. Patent No. 5,514,470 to Haffner et al.; U.S. Patent No. 6,902,796 to Morell et al.; U.S. Patent No. 7,803,244 to Siqueira, et al.

"Virgin polymer" as used herein denotes a polymer which has not been used in any way. It refers specifically to polyethylene [SDL1](otherwise referred to as "PE"). Desirably, the polyethylene is 100 percent prime grade, containing no recycled content. However, it is anticipated that off-prime polypropylene may be used in the present disclosure.

### Section II. - Description

The present disclosure addresses some of the problematic issues with current sustainable materials in that the films of the present disclosure are made from recycled materials, specifically PIR, that are more consistent with respect to content than post- PCR. Such films have more consistent and desirable physical and mechanical properties than those made with PCR, and are less costly than films made from 100% virgin polymer. The present disclosure discusses the method of making compositions containing PIR, the method of making films from the compositions, and the physical properties of the films.

### A. Components

### 1) Spun-Bonded Laminate ("SBL")

In general, the present disclosure pertains to thermoplastic polymer compositions containing virgin polymer and post industrial recycle ("PIR"). In a most desired aspect of the disclosure, the PIR is SBL.

As described supra, SBL is generally a composite material having at least one layer of elastomeric material sandwiched between non-elastic material. In one specific aspect of the disclosure, the SBL may have three layers. Generally, the outer layers may be composed of webs of nonelastic, nonwoven, polymer fibers. These fibers are desirably spunbond. The middle layer is made from amorphous polymer fibers. The fibers of the middle layer may be formed from, for example, elastomeric polystyrene/poly(ethylenebutylene)/polystyrene) block copolymers; linear tri-block copolymer based on styrene, ethylene/butylene and polystyrene; a styrene-butadiene-styrene block copolymer; a styrene-isoprene-styrene block copolymer; polyurethane, polyolefin elastomers; or a combination thereof. Commercial examples of such a copolymer includes KRATON, available from Kraton Polymers U.S. LLC, Houston, Texas. KRATON styrenic, thermoplastic, blockcopolymers are available in several different formulations, a number of which are identified in U. S. Pat. Nos. 4,663,220 and 5,304,599. Other elastic polymers include polyurethane polymers and copolymers, polyolfin elastomers such as VISTAMAXX from Exxon Mobil, Houston, Texas.

In another aspect of the disclosure, the SBL has four layers made from the following: i) a first layer of substantially parallel filaments formed of an elastomeric polymer, the elastomeric polymer having an average molecular weight at the peak of the molecular weight distribution curve of from about 65,000 g/mol to about 100,000 g/mol; ii) a second layer of elastomeric meltblown fibers, the meltblown fibers thermally bonded to at least a portion of the first layer filaments; iii) a third layer of spunbond fibers; and iv) a fourth layer of spunbond fibers. The first and second layers are disposed between the third and fourth layers.

There are many other types of SBL that may be used in the present diclosure, disclosed supra, and the two examples are not meant to be limiting.

### 2) Polymers

The article of the present disclosure includes a polymer such as a polyethylene. For example, suitable saturated ethylene polymers are homopolymers or copolymers of ethylene and propylene and are essentially linear in structure. As used herein, the term "saturated" refers to polymers which are fully saturated, but also includes polymers containing up to about 5 percent unsaturation. The homopolymers of ethylene include those prepared under either low pressure, i.e., linear low density or high density polyethylene, or high pressure, i.e., branched or low density polyethylene. The high density polyethylenes are generally characterized by a density that is about equal to or greater than 0.94 grams per cubic centimeter (g/cc). Generally, the high density polyethylenes useful as the base resin in the present disclosure have a density ranging from about 0.94 g/cc to about 0.97 g/cc. The polyethylenes can have a melt index, as measured at 2.16 kg and 190 degrees centigrade, ranging from about 0.005 decigrams per minute (dg/min) to 100 dg/min. Desirably, the polyethylene has a melt index of 0.01 dg/min to about 50 dg/min and more desirably of 0.05 dg/min to about 25 dg/min. Alternatively, mixtures of different types of polyethylenes can be used as the base resin for this disclosure, and such mixtures can have a melt index greater than 0.005 dg/min to less than about 100 dg/min.

The low density polyethylene has a density of less than 0.94 g/cc and are usually in the range of 0.91 g/cc to about 0.93 g/cc. The low density polyethylene polymer has a melt index ranging from about 0.05 dg/min to about 100 dg/min, and desirably from 0.05 dg/min to about 20 dg/min. Ultra low density polyethylene can be used in accordance with the present disclosure. Generally, ultra low density polyethylene has a density of less than 0.90 g/cc.

In one aspect, polypropylene has a semi-crystalline structure having a molecular weight at the peak of the molecular weight distribution curve of about 40,000 or more, a density of about 0.90 g/cc, a melting point of 168 to 171 degrees centigrade for isotactic polypropylene, and a tensile strength of 5000 psi. Polypropylene can also have other tacticities including syndiotactic and atactic.

Copolymers of ethylene which can be useful in the present disclosure may include copolymers of ethylene with one or more additional polymerizable, unsaturated monomers. Examples of such copolymers include, but are not limited to, copolymers of ethylene and alpha olefins (such as propylene, butene, hexene or octene) including linear low density polyethylene, copolymers of ethylene and vinyl esters of linear or branched carboxylic acids having 1-24 carbon atoms such as ethylene-vinyl acetate copolymers, and copolymers of ethylene and acrylic or methacrylic esters of linear, branched or cyclic alkanoes having 1-28 carbon atoms. Examples of these latter copolymers include ethylene-alkyl (meth)acrylate copolymers, such as ethylene-methyl acrylate copolymers.

Desirably, the selected polymer is 100% virgin prime grade, and a mixture of two or more virgin polymers may be used, as shown herein. It is contemplated that a recycled polymer may also be used.

### 3) Other Components

Besides the components noted above, still other additives may also be incorporated into the composition, such as plasticizers, fragrances, melt stabilizers, dispersion aids (e.g., surfactants), processing stabilizers, heat stabilizers, light stabilizers, UV stabilizers, antioxidants, heat aging stabilizers, whitening agents, antiblocking agents, antistatic agents, bonding agents, lubricants, fillers such as calcium carbonate, etc.

### B. Film Construction

Any known technique may be used to form a film from the blended and optionally cooled composition, including blowing, casting, flat die extruding, etc. In one particular embodiment, the film may be formed by a blown process in which a gas (e.g., air) is used to expand a bubble of the extruded polymer blend through the annular die. The bubble is then collapsed and collected in flat film form. In yet another embodiment, however, the film is formed using a casting technique.

In one aspect of the disclosure, the thermoplastic composition is produced from a mixture of virgin polymer (e.g. 100% prime PE) and PIR polymers. The mixture may include from about 10% of PIR to about 90% PIR. Preferably, the mixture comprises from about 20% of PIR to about 80% PIR. In another aspect of the disclosure, the material is made from about 30 parts by weight of virgin polymer (e.g. 100% prime PP) and 70 parts by weight of the PIR (30:70), or in the alternative, the ratio may be about 40:60, or about 50:50, or about 60:40, or about 70:30.

The melt extrusion temperature can range from the highest melting point of the components to the lowest decomposition temperature of the components. An example of the temperatures range is from about 160°C to about 240°C.

As indicated above, the thermoplastic composition of the present disclosure is formed by melt-blending together PIR and a virgin polymer. The melt blending can be performed in a single screw extruder, a twin screw extruder, or a continuous melt mixer.

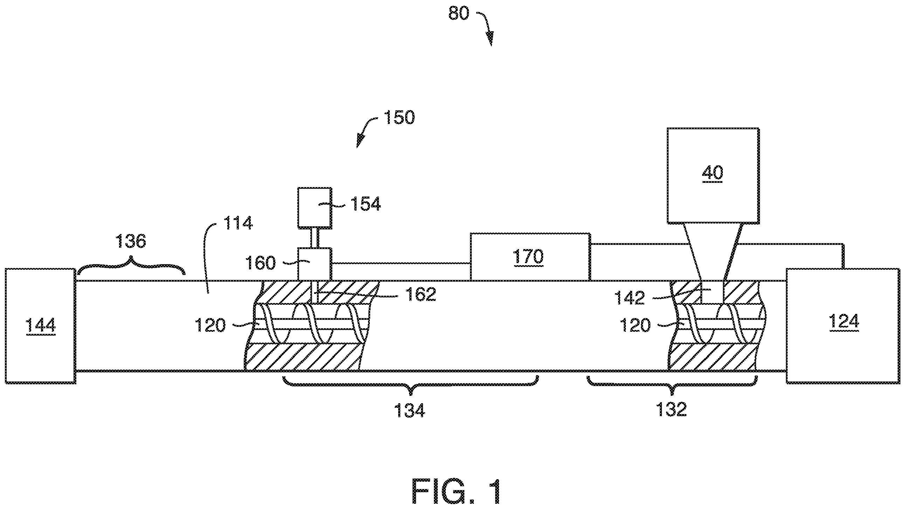

Referring to **Fig. 1****,** one exemplary extruder 80 that may be used to melt blend the virgin polymer and the PIR is illustrated. As shown, the extruder 80 contains a housing or barrel 114 and a screw 120 (e.g., barrier screw) rotatably driven on one end by a suitable drive 124 (typically including a motor and gearbox). One exemplary single-screw extruder 80 is a BOY 22D Injection Molding Machine which may be obtained from BOY Machines, Inc., Exton, PA. In the alternative, a twinscrew extruder may be employed that contains two separate screws. One example of twin screw extruder is a co-rotating twin screw extruder (Werner and Pfleiderer Corporation, Ramsey, NJ). Yet another exemplary extruder is a HAAKE single screw extruder that may be obtained from Thermo Electron Corporation, MA. Other single screw extruders or comparable equipment may be used.

The extruder 80 generally contains three sections: the feed section 132, the melt section 134, and the mixing section 136. The feed section 132 is the input portion of the barrel 114 where the polymeric material is added. The melt section 134 is the phase change section in which the plastic material is changed from a solid to a liquid. The mixing section 136 is adjacent the output end of the barrel 114 and is the portion in which the liquid plastic material is completely mixed. While there is no precisely defined delineation of these sections when the extruder is manufactured, it is well within the ordinary skill of those in this art to reliably identify the melt section 134 of the extruder barrel 114 in which phase change from solid to liquid is occurring.

A hopper 40 is also located adjacent to the drive 124 for supplying the virgin polymer, SBL and other optional materials through an opening 142 in the barrel 114 to the feed section 132. Opposite the drive 124 is the output end 144 of the extruder 80, where extruded plastic is output for further processing to form an article, which will be described in more detail below.

In some aspects, a liquid component may be added to the thermoplastic composition, e.g fragrances, plastizers, etc. Thus, a liquid-component supply station 150 may be provided on the extruder barrel 114 that includes at least one hopper 154, which is attached to a pump 160 to selectively provide the liquid through an opening 162 to the melt section 134. In this manner, the liquid may be mixed with the polymers in a consistent and uniform manner. Of course, in addition to or in lieu of supplying the liquid to the melt section 134, it should also be understood that it may be supplied to other sections of the extruder, such as the feed section 132 and/or the mixing section 136. For example, in certain embodiments, the liquid may be directly injected into the hopper 40 along with other polymeric materials.

The pump 160 may be a high pressure pump (e.g., positive displacement pump) with an injection valve so as to provide a steady selected amount of liquid to the barrel 114. If desired, a programmable logic controller 170 may also be employed to connect the drive 124 to the pump 160 so that it provides a selected volume of liquid based on the drive rate of the screw 120. That is, the controller 170 may control the rate of rotation of the drive screw 120 and the pump 160 to inject the liquid at a rate based on the screw rotation rate. Accordingly, if the rotation rate of the screw 120 is increased to drive greater amounts of plastic through the barrel 114 in a given unit of time, the pumping rate of the pump 160 may be similarly increased to pump proportionately greater amounts of liquid into the barrel 114.

The PIR and polymeric components may be processed within the extruder 80 under shear and pressure and heat to ensure sufficient mixing. For example, melt processing may occur at a temperature of from about 75°C to about 280°C, in some embodiments, from about 100°C to about 250°C, and in some embodiments, from about 150°Cto about 240°C. Likewise, the apparent shear rate during melt processing may range from about 100 seconds⁻¹ to about 10,000 seconds⁻¹, in some embodiments from about 500 seconds⁻¹ to about 5000 seconds⁻¹, and in some embodiments, from about 800 seconds⁻¹ to about 1200 seconds⁻¹. The apparent shear rate is equal to 4Q/πR³, where Q is the volumetric flow rate ("m³/s") of the polymer melt and R is the radius ("m") of the capillary (e.g., extruder die) through which the melted polymer flows. In one aspect, the desired temperature of the extruder-zones may be as follows: the feed zone is about 190°C; the compression zone is about 193°C; the metering zone is about 195°C; and the final zone about 200°C.

The compositions may be extruded through a film die. Both cast film (made with a flat die) and blown film (made with an annular die) can be made from the compositions of the present disclosure. The film making devices may make monolayer or multi-layered films (co-extrusion). If desired, the extrudate may be optionally cooled using any of a variety of techniques (e.g. chill roll, air cooling such as an air knife for cast film, IBC for blown film, and water quenching (direct or indirect contact with film).

In one aspect, the extrudate is subjected to at least one air-cooling stage in which a stream of air or "air knife" is placed into contact with the extrudate. An air knife is a device known in the art that focuses a stream of air at a very high flow rate to pin the edges of the film. The temperature of the air stream may vary depending on the temperature and moisture content of the cooled extrudate, but is typically from about 0°C to about 40°C, in some embodiments from about 5°C to about 35°C, and in some embodiments, from about 10°C to about 30°C.

In the case of cast films, multiple air-cooling stages may be employed to achieve the desired degree of cooling. Regardless of the number of stages employed, the total time that air is in contact with the extrudate (or residence time) is typically small, such as from about 1 to about 50 seconds, in some embodiments from about 2 to about 40 seconds, and in some embodiments, from about 3 to about 35 seconds. Blown film uses an air ring and ambient air to cool the extrudate, as is known in the art.

The temperature of the air-cooled extrudate may be from about 15°C to about 80°C, in some embodiments from about 20°C to about 70°C, and in some embodiments, from about 25°C to about 60°C.

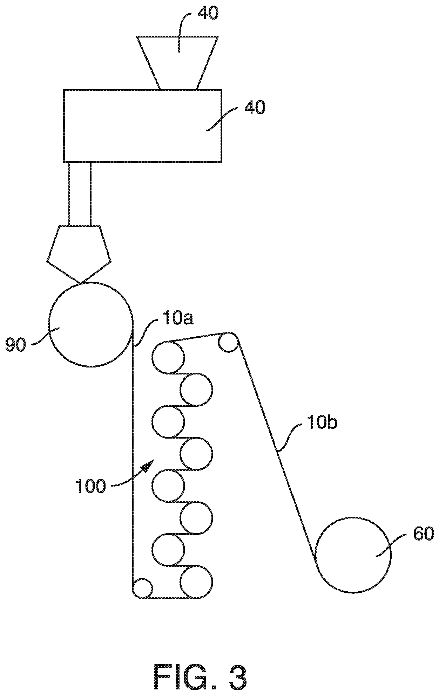

Referring to **Fig. 3****,** for instance, one embodiment of a method for forming a cast film is shown. In this embodiment, the raw materials (not shown) are supplied to the extruder 80 in the manner described above and shown in **Fig. 1****,** and then cast onto a casting roll 90 to form a single-layered precursor film 10a. If a multilayered film is to be produced, the multiple layers are coextruded together onto the casting roll 90. The casting roll 90 may optionally be provided with embossing elements to impart a pattern to the film. Typically, the casting roll 90 is kept at temperature sufficient to solidify and quench the sheet 10a as it is formed, such as from about 20 to 60°C. If desired, a vacuum box may be positioned adjacent to the casting roll 90 to help keep the precursor film 10a close to the surface of the roll 90. Additionally, air knives or electrostatic pinners may help force the precursor film 10a against the surface of the casting roll 90 as it moves around a spinning roll.

Once cast, the film 10a may then be optionally oriented in one or more directions to further improve film uniformity and reduce thickness. For example, the film may be immediately reheated to a temperature below the melting point of one or more polymers in the film, but high enough to enable the composition to be drawn or stretched. In the case of sequential orientation, the "softened" film is drawn by rolls rotating at different speeds of rotation such that the sheet is stretched to the desired draw ratio in the longitudinal direction (machine direction). This "uniaxially" oriented film may then be laminated to a fibrous web. In other aspects, the uniaxially oriented film may also be oriented in the cross-machine direction to form a "biaxially oriented" film, as desired.

One exemplary method for forming a uniaxially oriented film is shown, which one skilled in the art will realize may not be applicable to all blended materials due to the potential for weak areas caused by the PIR content. As illustrated, the precursor film 10a is directed to a film-orientation unit 100 or machine direction orientation ("MDO") equipment, such as commercially available from Marshall and Willams, Co. of Providence, Rhode Island. The MDO has a plurality of stretching rolls (such as from 5 to 8) which progressively stretch and thin the film in the machine direction, which is the direction of travel of the film through the process as shown in **Fig. 3****.** While the MDO 100 is illustrated with eight rolls, it should be understood that the number of rolls may be higher or lower, depending on the level of stretch that is desired and the degrees of stretching between each roll. The film may be stretched in either single or multiple discrete stretching operations. It should be noted that some of the rolls in an MDO apparatus may not be operating at progressively higher speeds. If desired, some of the rolls of the MDO 100 may act as preheat, cooling, or annealing rolls. If present, these first few rolls heat the film 10a above room temperature (e.g., to 125°F). The progressively faster speeds of adjacent rolls in the MDO act to stretch the film 10a. The rate at which the stretch rolls rotate determines the amount of stretch in the film and final film weight.

The resulting film 10b may then be wound and stored on a take-up roll 60. While not shown here, various additional potential processing and/or finishing steps known in the art, such as slitting, treating, aperturing, printing graphics, or lamination of the film with other layers (e.g., nonwoven web materials), may be performed without departing from the spirit and scope of the disclosure.

### C. Film Features

The film of the present disclosure may be mono- or multi-layered. Multi-layer films may be prepared by co-extrusion of the layers, extrusion coating, or by any conventional layering process.

For example, the film may contain from two (2) to fifteen (15) layers, and in some embodiments, from three (3) to twelve (12) layers. In one aspect, a multi-layer film has one base layer (may also be referred to as a core layer) and one skin layer (not shown). The core layer is formed from a blend of virgin polymer or a mixture of two or more virgin polymers and PIR as described in the present disclosure. In most embodiments, the skin layer is formed from virgin polymers as described supra. It should be understood, however, that other polymers or blends of polymers may be employed in the skin layer as long as they are compatible with or have good adhesion with the base layer or a core layer as described below.

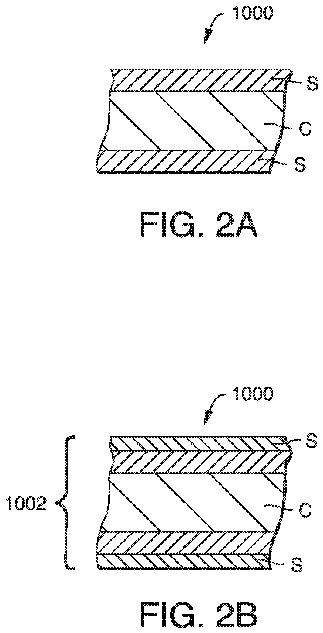

In another aspect as shown in **Fig. 2A****,** there is a three-layered film 1000 having a core layer "C" that is either a blend or of two or more virgin polymers and PIR. The outer skin layers "S" may be virgin polymers. The ratio between the layers may range from about 10% to about 80% of the core layer (or middle layer) and from anout 10% to about 90% of the two combined skin layers. For instance, the core layer C may be up to about 30%, up to about 40%, up to about 50%, up to about 60%, or up to about 80% of the total thickness of the multi-layer film 1000. Each skin layer S may be up to about 10%, or up to about 25%, or up to about 45% of the total thickness of the multi-layer film 1000.

In another aspect as shown in **Fig. 2B****,** a five-layered structure has a core layer "C" that is either a blend of virgin polymers or a mixture of two or more virgin polymers and PIR, and two outer skin layers "S" that may be virgin polymers. The ratio between the layers may range from about 20% to about 80% of the core layer and from about 10% to about 40% of the two combined skin layers, and from about 10% to about 40% of the two middle layers M1 and M2.

The total thickness of the film of the present disclosure may be relatively small to increase flexibility. For example, the film may have a thickness of about 100 micrometers or less, in some embodiments from about 1 to about 50 micrometers, in some embodiments from about 2 to about 35 micrometers, and in some embodiments, from about 5 to about 30 micrometers. Despite having such a small thickness, the film of the present disclosure is nevertheless able to retain good mechanical properties during use. One parameter that is indicative of the film strength is the ultimate tensile strength, which is equal to the peak stress obtained in a stress-strain curve, such as obtained in accordance with ASTM Standard D638-08. Desirably, the film of the present disclosure exhibits a peak stress in the machine direction ("MD") of from about 40 to about 65 megapascals (MPa); in some embodiments, from about 50 to about 60 MPa; in some embodiments, a peak stress in the cross-machine direction ("CD") of from about 30 to about 40 megapascals (MPa); and in some embodiments from about 35 to about 40 MPa.

Although possessing good strength, the film is relatively ductile. One parameter that is indicative of the ductility of the film is the percent strain of the film at its breaking point (strain at break), as determined by a stress-strain curve obtained in accordance with ASTM Standard D608-08. For example, the strain at break in the machine direction may be about 450% or more, in some embodiments about 475% or more, and in some embodiments, from about 490% to about 610%. Likewise, the strain at break in the cross-machine direction may be about 600% or more, in some embodiments about 650% or more, and in some embodiments, from about 700% to about 825%.

Another parameter that is indicative of ductility is the modulus of elasticity of the film, which is equal to the ratio of the tensile stress to the tensile strain as determined from the slope of a stress-strain curve. For example, a dry film of the present disclosure typically exhibits a modulus of elasticity in the machine direction ("MD") of from about 50 to about 650 MPa, in some embodiments from about 150 to about 425 MPa, and in some embodiments, from about 225 to about 435 MPa. The same film may exhibit a modulus of elasticity in the cross-machine direction ("CD") of about 100 to about 550 MPa, in some embodiments from about 150 to about 325 MPa, and in some embodiments, about 225 to about 300 MPa.

### D. Applications

The film of the present disclosure may be used in a wide variety of applications, such as a packaging film. The film may be used as an individual wrap, a packaging pouch, or a bag for the disposal of a variety of articles, such as food products. The film may be used as a wrap for paper products (e.g., tissue, wipes, paper towels, etc.), absorbent articles, etc. Various suitable pouch, wrap, or bag configurations for absorbent articles are disclosed, for instance, in U.S. Patent Nos. 6,716,203 to Sorebo, et al. and 6,380,445 to Moder, et al., as well as U.S. Patent Application Publication No. 2003/0116462 to Sorebo, et al.

Packaging films may have only one layer of the composition of this disclosure, or it may have from 2 to 15 layers as described in previous section of this disclosure. In multi-layer films, the external layer or outer skin layer can be treated to improve printing quality. Desirably, any layer that is also the innermost layer of a package has adequate heat sealing properties to provide durability and strength of any seal during shipping, storage, and use.

The film may also be employed in other applications. For example, the film may be used in an absorbent article. An "absorbent article" generally refers to any article capable of absorbing water or other fluids. Examples of some absorbent articles include, but are not limited to, personal care absorbent articles, such as diapers, training pants, absorbent underpants, incontinence articles, feminine hygiene products (e.g., sanitary napkins, pantiliners, etc.), swim wear, baby wipes, and so forth; medical absorbent articles, such as garments, fenestration materials, underpads, bedpads, bandages, absorbent drapes, and medical wipes; food service wipers; clothing articles; and so forth. Several examples of such absorbent articles are described in U.S. Patent Nos. 5,649,916 to DiPalma, et al.; 6,110,158 to Kielpikowski; 6,663,611 to Blaney, et al. Still other suitable articles are described in U.S. Patent Application Publication No. 2004/0060112 A1 to Fell et al., as well as U.S. Patent Nos. 4,886,512 to Damico et al.; 5,558,659 to Sherrod et al.; 6,888,044 to Fell et al.; and 6,511,465 to Freiburger et al. Materials and processes suitable for forming such absorbent articles are well known to those skilled in the art.

In this regard, one particular embodiment of a sanitary napkin that may employ the film of the present disclosure will now be described in more detail. For purposes of illustration only, an absorbent article 200 can be a sanitary napkin for feminine hygiene as shown in **Fig. 12A****.** In such an embodiment, the absorbent article 200 includes a main body portion containing a topsheet 202, an outer cover or backsheet 204, an absorbent core 206positioned between the backsheet 204 and the topsheet 202.A pair of flaps (not shown) may extend from each longitudinal side 208 of the main body portion. The topsheet 202 defines a body-facing surface 210 of the absorbent article 200. The absorbent core 206 is positioned inward from the outer periphery 212 of the absorbent article 200 and includes a body-facing side 214 positioned adjacent the topsheet 202 and a garment-facing surface (not shown) positioned adjacent the backsheet 204. In one particular embodiment of the present disclosure, the backsheet 204 is a film formed from the thermoplastic composition of the present disclosure and is generally liquid-impermeable and optionally vapor-permeable. The film used to form the backsheet 204 may also be laminated to one or more nonwoven web facings such as described supra.

The topsheet 202 is generally designed to contact the body of the user and is liquid-permeable. The topsheet 202 may surround the absorbent core 206 so that it completely encases the absorbent article. Alternatively, the topsheet 202 and the backsheet 204 may extend beyond the absorbent core 206 and be peripherally joined together, either entirely or partially, using known techniques. Typically, the topsheet 202 and the backsheet 204 are joined by adhesive bonding, ultrasonic bonding, or any other suitable joining method known in the art. The topsheet 202 is sanitary, clean in appearance, and somewhat opaque to hide bodily discharges collected in and absorbed by the absorbent core. The topsheet 202 further exhibits good strike-through and rewet characteristics permitting bodily discharges to rapidly penetrate through the topsheet 202 to the absorbent core 206, but not allow the body fluid to flow back through the topsheet to the skin of the wearer. For example, some suitable materials that may be used for the topsheet 202 include nonwoven materials, perforated thermoplastic films, or combinations thereof. A nonwoven fabric made from polyester, polyethylene, polypropylene, bicomponent, nylon, rayon, or like fibers may be utilized. For instance, a white uniform spunbond material is particularly desirable because the color exhibits good masking properties to hide menses that has passed through it. U.S. Patent Nos. 4,801,494 to Datta, et al. and 4,908,026 to Sukiennik, et al. teach various other cover materials that may be used in the present disclosure.

The topsheet 202 may also contain a plurality of apertures (not shown) formed therethrough to permit body fluid to pass more readily into the absorbent core. The apertures may be randomly or uniformly arranged throughout the topsheet, or they may be located only in a narrow longitudinal band or strip arranged along the longitudinal axis 216 of the absorbent article. The apertures permit rapid penetration of body fluid down into the absorbent core. The size, shape, diameter and number of apertures may be varied to suit one's particular needs.

The absorbent core 206 may be formed from a single absorbent member or a composite containing separate and distinct absorbent members. It should be understood, however, that any number of absorbent members may be utilized in the present disclosure. For example, in an embodiment, the absorbent core 206 may contain an intake member (not shown) positioned between the topsheet 202 and a transfer delay member (not shown) between the intake member and the absorbent core 206. The intake member may be made of a material that is capable of rapidly transferring, in the z-direction, body fluid that is delivered to the topsheet. The intake member may generally have any shape and/or size desired. In one embodiment, the intake member has a rectangular shape, with a length equal to or less than the overall length of the absorbent article 200, and a width less than the width of the absorbent article. Any of a variety of different materials may be used for the intake member to accomplish the above-mentioned functions. The material may be synthetic, cellulosic, or a combination of synthetic and cellulosic materials. For example, airlaid cellulosic tissues may be suitable for use in the intake member. The airlaid cellulosic tissue may have a basis weight ranging from about 10 grams per square meter (gsm) to about 300 gsm, and in some embodiments, between about 100 gsm to about 250 gsm. In one embodiment, the airlaid cellulosic tissue has a basis weight of about 200 gsm. The airlaid tissue may be formed from hardwood and/or softwood fibers. The airlaid tissue has a fine pore structure and provides an excellent wicking capacity, especially for menses.

The transfer delay member may contain a material that is less hydrophilic than the other absorbent members, and may generally be characterized as being substantially hydrophobic. For example, the transfer delay member may be a nonwoven fibrous web composed of a relatively hydrophobic material, such as polypropylene, polyethylene, polyester or the like, and also may be composed of a blend of such materials. One example of a material suitable for the transfer delay member is a spunbond web composed of polypropylene, multi-lobal fibers. Further examples of suitable transfer delay member materials include spunbond webs composed of polypropylene fibers, which may be round, tri-lobal or poly-lobal in cross-sectional shape and which may be hollow or solid in structure. Typically the webs are bonded, such as by thermal bonding, over about 3% to about 30% of the web area. Other examples of suitable materials that may be used for the transfer delay member are described in U.S. Patent Nos. 4,798,603 to Meyer, et al. and 5,248,309 to Serbiak, et al. To adjust the performance of the disclosure, the transfer delay member may also be treated with a selected amount of surfactant to increase its initial wettability.

Typically, the length of the transfer delay member is approximately equal to the length of the absorbent article. The transfer delay member may also be equal in width to the intake member, but is typically wider. The transfer delay member typically has a basis weight less than that of the other absorbent members. For example, the basis weight of the transfer delay member is typically less than about 150 grams per square meter (gsm), and in some embodiments, between about 10 gsm to about 100 gsm. In one particular embodiment, the transfer delay member is formed from a spunbonded web having a basis weight of about 30 gsm.

Besides the above-mentioned members, the absorbent core 206 may be a composite absorbent member (not shown), such as a coform material. In this instance, fluids may be wicked from the transfer delay member into the composite absorbent member. The composite absorbent member may be formed separately from the intake member and/or transfer delay member, or may be formed simultaneously therewith. In one embodiment, for example, the composite absorbent member may be formed on the transfer delay member or intake member, which acts a carrier during the coform process described above.

Although various configurations of an absorbent article have been described above, it should be understood that other configurations are also included within the scope of the present disclosure. Further, the present disclosure is by no means limited to backsheets and the film of the present disclosure may be incorporated into a variety of different components of an absorbent article. For example, as seen in **Fig. 12B****,** a release liner 220 of an absorbent article 200 may be made from a film of the present disclosure. The release liner 220 covers and protects an adhesive strip 218 located on the garment-facing surface 222 of backsheet 204.

The present disclosure may be better understood with reference to the following examples.

### Section III. Experiments

### A. Materials Employed

1. DOWLEX 2244G Linear Low Density Polyethylene with 1.0 g/10 minutes at 190°C (obtained from Dow Chemical Company, Midland, MI).
2. SBL PIR obtained from Becher Engineering, Neenah, WI, with a melt flow of 26.0 g/10 minutes at 190°C.

### B. Equipment Employed

A HAAKE Rheomix 252 single screw extruder was used. This extruder has a 1.9cm (3/4") diameter, and a 25:1 Length/Diameter ratio, 3 barrel extruder, that attaches to the HAAKE Polylab QC drive module, designed to melt the polymer and convey it to a film die (e.g. 10cm (4 inch) diameter, or 20cm (8 inch) diameter).

### Films produced

1. Comparative example #1 - 100% Dowlex 2244G LLDPE
2. Comparative example #2 - 100% SBL reclaim
3. Example #1 - LLDPE/SBL at 90%/10% w/w ratio
4. Example #2 - LLDPE/SBL at 70%/30% w/w ratio
5. Example #3 - LLDPE/SBL at 50%/50% w/w ratio
The film making process was a flood-feed process, having a throughput determined by the machine size and running conditions. Film process conditions are presented in Table 1.

### Comparative example #1

The Dowlex 2244G (LLDPE) was processed on a cast film line which consisted of a HAAKE single screw 25:1 L/D extruder attached to a 15cm (6") cast film die. A 1 mil film thickness was targeted. The temperature profile was 180°C, 180°C, 190°C and 190°C for extruder zones 1 through 3 and the die. The extruder speed was 50 RPM. The torque registered 18 Newton meter (Nm) and the pressure at the die was 193 kPa (28 pounds per square inch (PSI)). The melt temperature of extruded polymer was 208°C. The resulting film sample produced had a smooth surface, was soft to the touch, transparent and strong.

### Comparative example #2

The SBL reclaim (K-C Stretch Bonded Laminate reclaim) was processed on a cast film line which consisted of a HAAKE single screw 25:1 L/D extruder attached to a 15cm (6") cast film die. A 1 mil film thickness was targeted. The temperature profile was 180°C, 180°C, 190°C and 190 °C for extruder zones 1 through 3 and the die. The extruder speed was 50 RPM. The torque registered 7 Newton meter (Nm) and the pressure at the die was 207 kPa (30 pounds per square inch (PSI)). The melt temperature of extruded polymer was 208°C. The resulting film sample produced had a smooth surface, was soft to the touch, noisy when ruffled, opaque and strong.

### Example #1

The LLDPE/SBL was dry blended (mixed in solid state) at 90%/10% w/w ratio then processed on a cast film line which consisted of a HAAKE single screw 25:1 L/D extruder attached to a 15cm (6") cast film die. A 1 mil film thickness was targeted. The temperature profile was 180°C, 180°C °C, 190°C and 190°C for extruder zones 1 through 3 and the die. The extruder speed was 50 RPM. The torque registered 12 Newton meter (Nm) and the pressure at the die was 159 kPa (23 pounds per square inch (PSI)). The melt temperature of extruded polymer was 208°C. The resulting film sample produced had a smooth surface, was soft to the touch, noisy when ruffled, opaque and strong.

### Example #2

The LLDPE/SBL was dry blended (mixed in solid state) at 70%/30% w/w ratio then processed on a cast film line which consisted of a HAAKE single screw 25:1 L/D extruder attached to a 15cm (6") cast film die. A 1 mil film thickness was targeted. The temperature profile was 180°C, 180°C, 190°C and 190°C for extruder zones 1 through 3 and die. The extruder speed was 60 RPM. The torque registered 9 Newton meter (Nm) and the pressure at the die was 144kPa (21 pounds per square inch
(PSI)). The melt temperature of extruded polymer was 208°C. The resulting film sample produced had a smooth surface, was soft to the touch, noisy when ruffled, opaque and strong.

### Example #3

The LLDPE/SBL was dry blended (mixed in solid state) at 50%/50% w/w ratio then processed on a cast film line which consisted of a HAAKE single screw 25:1 L/D extruder attached to a 15cm (6") cast film die. A 1 mil film thickness was targeted. The temperature profile was 180°C, 180°C, 190°C and 190°C for extruder zones 1 through 3 and die. Duplicate readings were taken to ensure accuracy of the data. The extruder speed was 60 RPM. The torque registered 8 Newton meter (Nm) and the pressure at the die was 124 kPa (18 pounds per square inch (PSI)). The melt temperature of extruded polymer was 208°C. The resulting film sample produced had a smooth surface, was soft to the touch, noisy when ruffled, opaque and strong.

**TABLE 1: Process Conditions**

| **Code** | **Speed (rpm)** | **T-1 (°C)** | **T-2 (°C)** | **T-3 (°C)** | **Die (°C)** | **Z-3 (psi)** | **Torque (N.m)** | **T melt (°C)** | **Chill (°C)** | **Chill roll (rpm)** |
|---|---|---|---|---|---|---|---|---|---|---|
| **Comparative Example 1** DOWLEX 2244G LLDPE 100% | 50 | 180 | 180 | 190 | 190 | 28 | 18 | 208 | 10 | 800 |
| **Comparative Example 2** SBL reclaim 100% | 50 | 180 | 180 | 190 | 190 | 30 | 7 | 208 | 10 | 1200 |
| **Example 1** 2244G/SBL reclaim 90:10 ratio | 50 | 180 | 180 | 190 | 190 | 23 | 12 | 208 | 10 | 870 |
| **Example 2** 2244G/SBL reclaim 70:30 ratio | 60 | 180 | 180 | 190 | 190 | 21 | 9 | 207 | 10 | 925 |
| **Example 3** 2244G/SBL reclaim 50:50 ratio | 60 | 180 | 180 | 190 | 190 | 18 | 8 | 208 | 10 | 1200 |

### C. Tensile Test Results

**TABLE 2: CD Tensile Properties**

| **Code** | **Variable Number** | **Thickness (mil)** | **Peak load (g)** | **Peak stress (MPa)** | **Strain @ break (%)** | **Modulus (MPa)** | **Stress @ break (MPa)** | **Energy per Volume @ break (J/cm³)** |
|---|---|---|---|---|---|---|---|---|
| **Comparative Example 1** DOWLEX 2244G LLDPE 100% | 1 | 280 | 34 | 825 | 87 | 34 | 119 | 1 |
| **Comparative Example 2** SBL reclaim 100% | 1 | 307 | 40 | 611 | 603 | 39 | 127 | 1 |
| **Example 1** 2244G/SBL reclaim 90:10 ratio | 1 | 291 | 38 | 728 | 157 | 37 | 124 | 1 |
| **Example 2** 2244G/SBL reclaim 70:30 ratio | 1 | 289 | 37 | 706 | 224 | 37 | 125 | 1 |
| **Example 3** 2244G/SBL reclaim 50:50 ratio | 1 | 319 | 38 | 678 | 335 | 38 | 135 | 1 |

**TABLE 3: MD Tensile Properties**

| **Code** | **Thickness (mil)** | **Peak load (gf)** | **Peak stress (MPa)** | **Strain @ break** | **Modulus (MPa)** | **Stress @ break (MPa)** | **Energy per Volume @ break (J/cm3)** |
|---|---|---|---|---|---|---|---|
| **Comparative Example 1** DOWLEX 2244G LLDPE 100% | 1 | 327 | 40 | 598 | 105 | 40 | 92 |
| **Comparative Example 2** SBL reclaim 100% | 1 | 309 | 40 | 610 | 655 | 40 | 127 |
| **Example 1** 2244G/SBL reclaim 90:10 ratio | 1 | 396 | 51 | 495 | 144 | 51 | 103 |
| **Example 2** 2244G/SBL reclaim 70:30 ratio | 1 | 472 | 61 | 469 | 239 | 61 | 122 |
| **Example 3** 2244G/SBL reclaim 50:50 ratio | 1 | 467 | 57 | 458 | 411 | 57 | 120 |

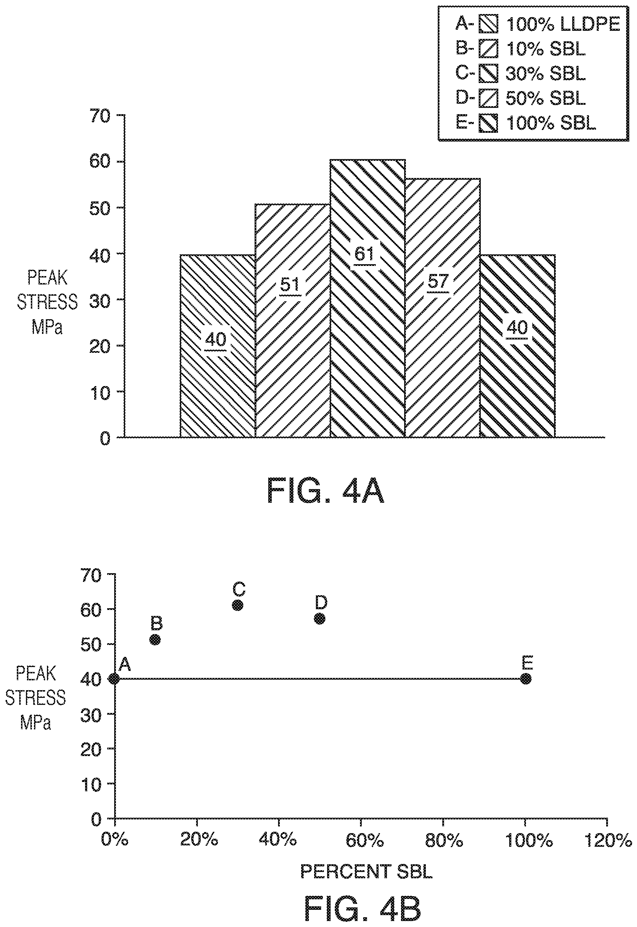

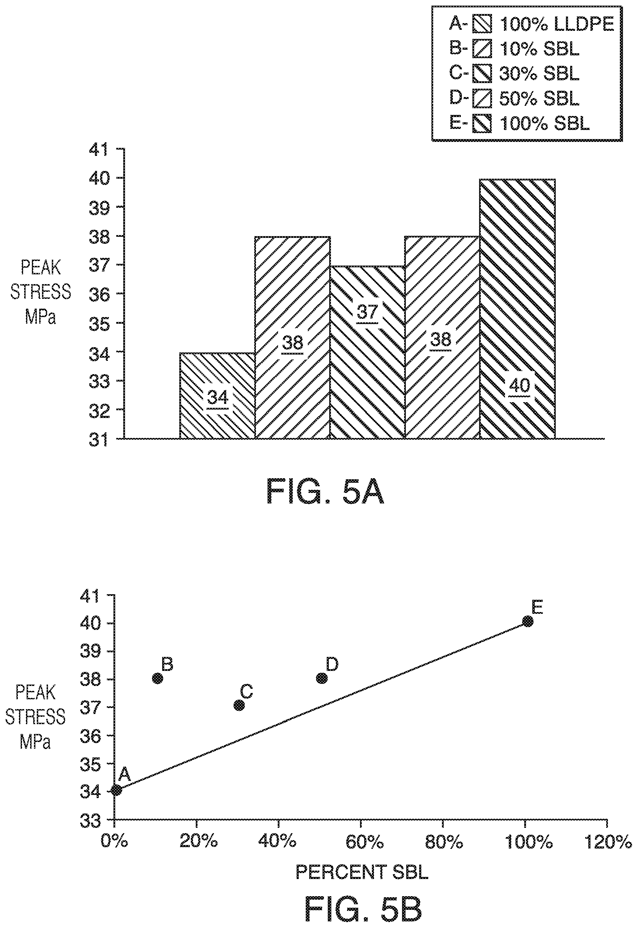

Stress: The peak stress in MD is plotted in **Figs. 4A** and **4B****.** Surprisingly, the data showed that all three polymer blends containing from 10%, 30% and 50% SBL had a higher peak stress than 100% LLDPE and 100% SBL. The line connecting the data point for 100% LLDPE (0% SBL) and 100% SBL (0% LLDPE) is a predicted linear relationship between the two data points. This predicted linear relationship is based an a "mixture rule", which means that the more PIR that the present in the film composition, the less stress it can withstand prior to break. As can be seen in **Figs. 4A and 4B****,** films containing both virgin material and PIR have significantly higher peak stresses than what would be expected using the mixture rule because the data are above the mixture rule line. The combination of virgin polymers and PIR result in an unexpected synergistic effect. Likewise, there is an unexpected synergistic effect relating to the peak stress in the CD as a function of SBL content, As can be seen in **Figs. 5A** and **5B****,** the peak stress values of all three blended films are also above the mixture rule line.

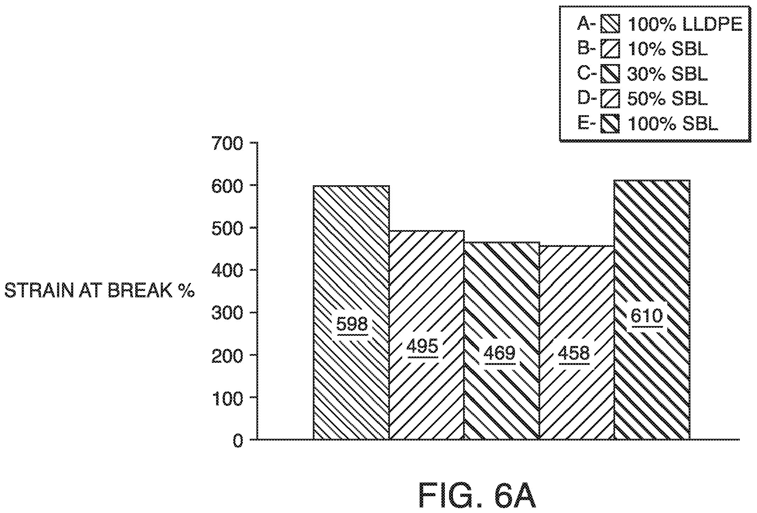

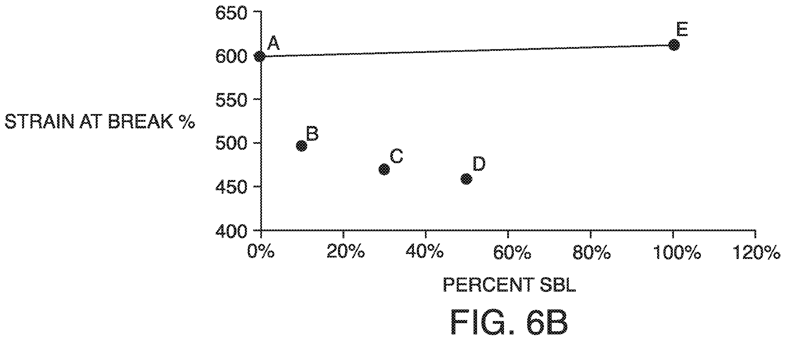

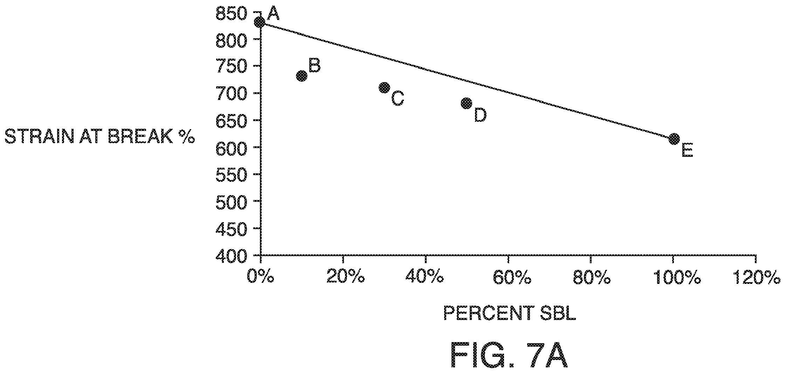

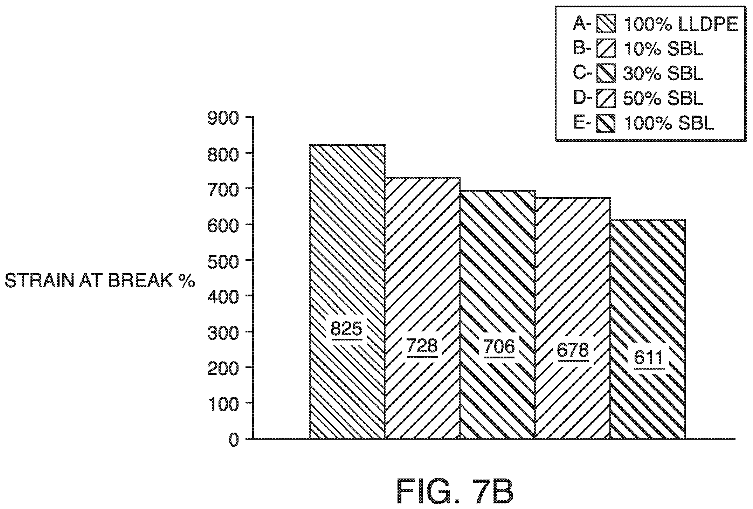

Strain: The strain at break of the films in the MD is shown in **Figs. 6A** and **6B****.** Because the strain at break is below the mixture rule line, there is no synergistic effect with respect to this property. The break strain in the CD as a function of SBL content is shown in **Figs. 7A** and **7B****.** Again, there is no synergistic effect with respect to this property because the data are below the mixture rule line.

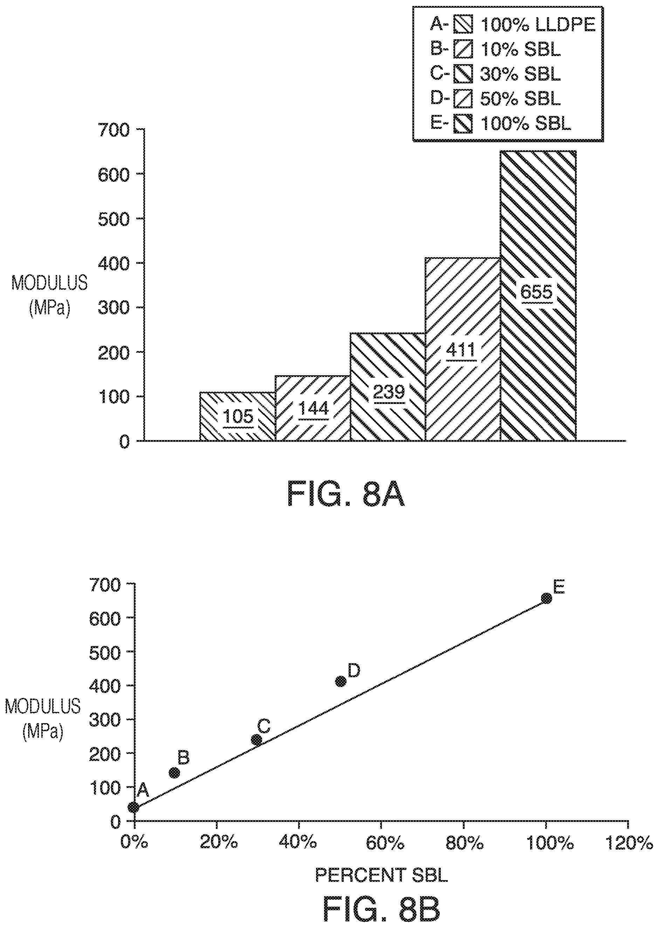

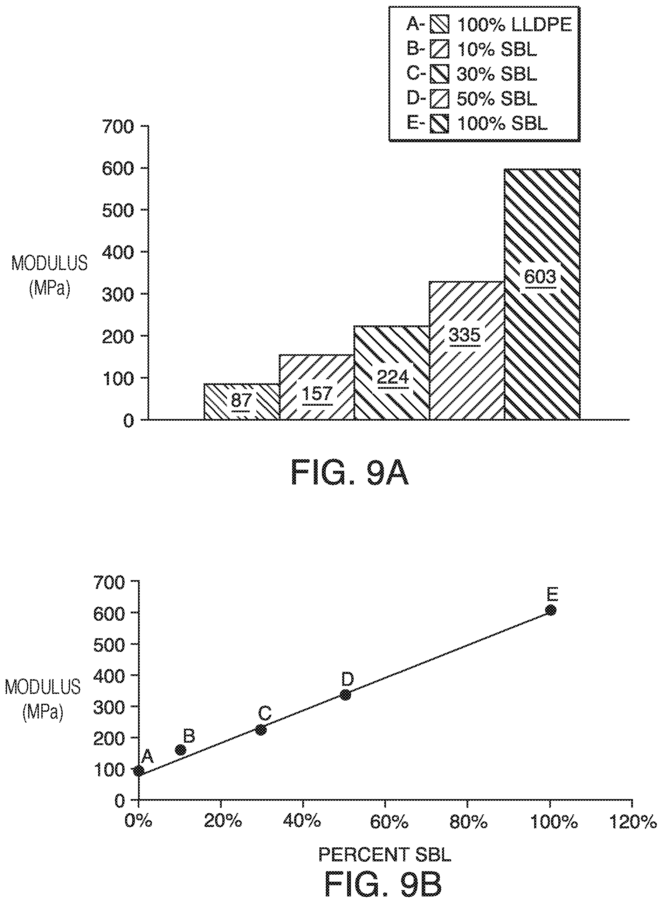

Modulus: The modulus in the MD as a function of SBL is shown in **Figs. 8A** and **8B****.** The data are slightly above the mixture rule line, suggesting a slight synergistic effect with respect to this property. The modulus in CD as a function of SBL content is plotted in **Figs. 9A** and **9B****.** All the data have a linear relationship in accordance with the mixture rule line. Therefore, there is no showing of a synergistic effect.

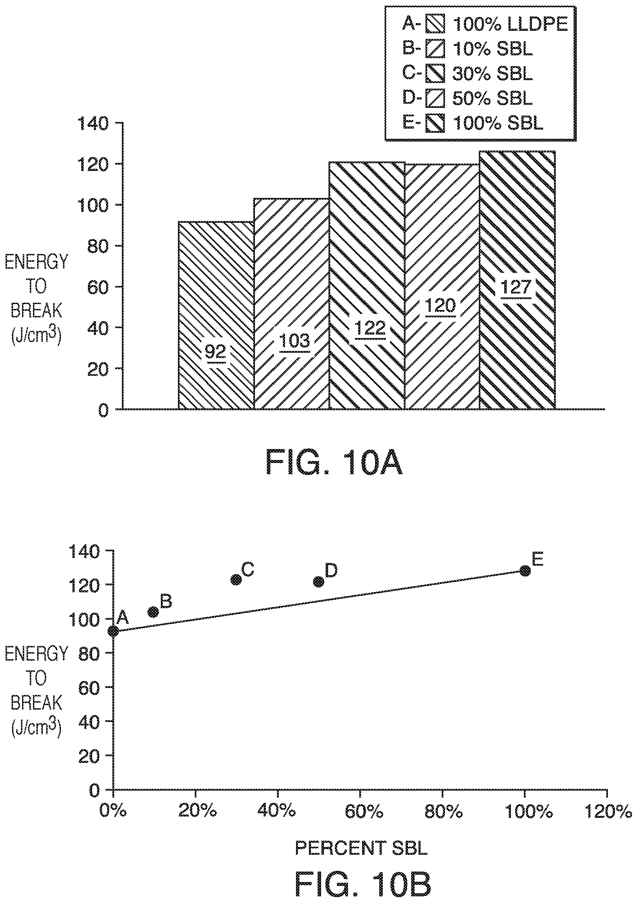

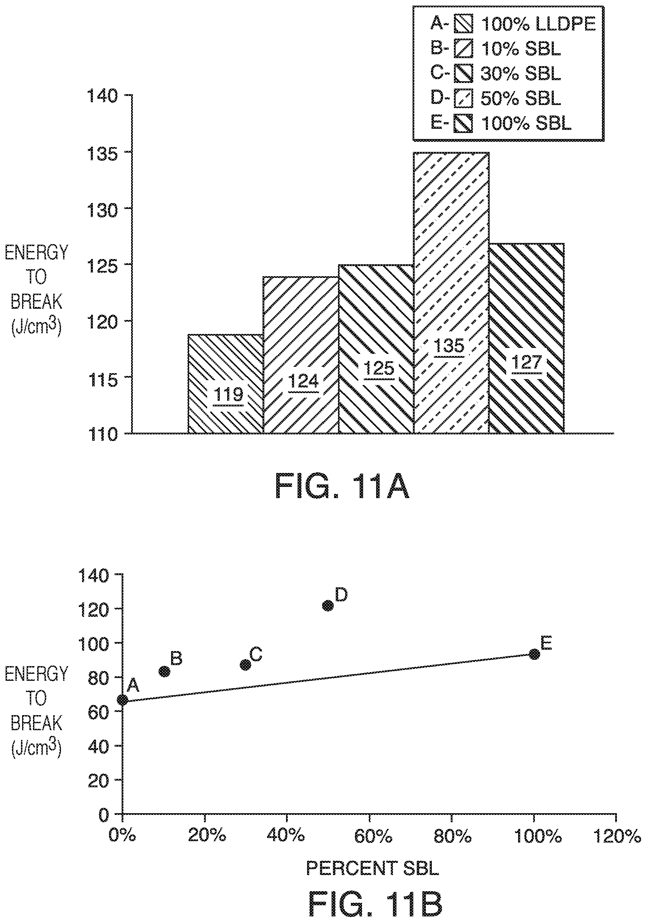

Toughness: The energy required to break the film of the present disclosure is a measure of the toughness. The toughness in the MD is shown in **Figs. 10A** and **10B****.** All three blend films had a toughness value above the mixture rule line, showing an unexpected synergistic effect in the MD. The toughness in the CD is shown in **Figs. 11A** and **11B****.** There is also an unexpected synergistic effect in the CD as demonstrated by the data above the mixture rule line.

### Tensile Test Method

Test method: ASTM D638 entitled" Standard Test Method For The Tensile Properties Of Plastics".

Test Conditions: 23 ± 2°C, 50 ± 10% Relative humidity

Conditioning: 24 hours, 23 ± 2°C, 50 ± 10% Relative humidity

The present disclosure has been described in general and in detail by means of examples.

## Claims

1. A method for forming a sustainable thermoplastic film, the method comprising:
forming a mixture by supplying a virgin polymer comprising polyolefin and a post-industrial-recycled material (PIR) to a feed section of an extruder, wherein the PIR comprises a thermoplastic, elastomeric-polymer and a spunbond component;
melt processing the mixture within the extruder and extruding the mixture through a die to form the film, wherein the film has a thickness of 100 micrometers or less.

2. The method of claim 1 wherein the thermoplastic, elastomeric-polymer is a styrenic, thermoplastic block-copolymer.

3. The method of claim 1 wherein the polyolefin is polyethylene, polypropylene, and copolymers of ethylene or propylene with other vinyl comonomers,and preferably
wherein the polyolefin is selected from a group of low density polyethylene, linear low density polyethylene, high density polyethylene, polypropylene, ethylene propylene copolymers, ethylene-co-vinyl acatate (EVA), ethylene-co-methyl acrylate (EMA), ethylene-co-acrylic acid (EAA), ethylene-co-methacrylic acid (EMAA).

4. The method of claim 1 wherein the thermoplastic, elastomeric-polymer is selected from the group consisting of a polystyrene/poly(ethylenebutylene)/polystyrene) block copolymer; a linear tri-block copolymer based on styrene, ethylene/butylene and polystyrene; a styrene-butadiene-styrene block copolymer, a styrene-isoprene-styrene block copolymer, polyurethane, polyolefin elastomers and a combination thereof.

5. The method claim 1 wherein the thermoplastic elastomeric-polymer has an average molecular weight of from about 65,000 g/mol to about 100,000 g/mol.

6. The method of claim 1 wherein the mixture comprises 10 percent to 90 percent PIR, and preferably wherein the mixture comprises 20 percent to 80 percent PIR.

7. The method of claim 1 wherein the step of melt processing is performed at temperatures ranging from 160 °C to 240 °C.

## Patentansprüche

1. Verfahren zur Bildung einer nachhaltigen thermoplastischen Folie, wobei das Verfahren Folgendes umfasst:
das Bilden einer Mischung durch das Zuführen einer Polyolefin umfassenden Polymerneuware und eines recycelten Industriematerials (PIR) zu einer Speisezone eines Extruders, wobei das PIR ein thermoplastisches elastomeres Polymer und eine schmelzgesponnene Komponente umfasst;
das Schmelzverarbeiten der Mischung innerhalb des Extruders und das Extrudieren der Mischung durch eine Düse, wodurch die Folie gebildet wird, wobei die Folie eine Dicke von 100 µm oder weniger aufweist.

2. Verfahren nach Anspruch 1, wobei das thermoplastische elastomere Polymer ein thermoplastisches Styrol-Block-Copolymer ist.

3. Verfahren nach Anspruch 1, wobei das Polyolefin Polyethylen, Polypropylen und Copolymere von Ethylen oder Propylen mit anderen Vinyl-Comonomeren ist und
wobei das Polyolefin vorzugsweise ausgewählt ist aus einer Gruppe von Polyethylen niedriger Dichte, linearem Polyethylen niedriger Dichte, Polyethylen hoher Dichte, Polypropylen, Ethylen-Propylen-Copolymeren, Ethylen-Co-Vinylacetat (EVA), Ethylen-Co-Methylacrylat (EMA), Ethylen-Co-Acrylsäure (EAA), Ethylen-Co-Methacrylsäure (EMAA).

4. Verfahren nach Anspruch 1, wobei das thermoplastische elastomere Polymer ausgewählt ist aus der Gruppe bestehend aus einem Polystyrol/Poly(ethylenbutylen)/Polystyrol)-Block-Copolymer; einem linearen Triblock-Copolymer, das auf Styrol, Ethylen/Butylen und Polystyrol basiert; einem StyrolButadien-Styrol-Block-Copolymer, einem Styrol-Isopren-Styrol-Block-Copolymer, Polyurethan, Polyolefin-Elastomeren und einer Kombination davon.

5. Verfahren nach Anspruch 1, wobei das thermoplastische elastomere Polymer eine mittlere Molmasse von etwa 65 000 g/mol bis etwa 100 000 g/mol aufweist.

6. Verfahren nach Anspruch 1, wobei die Mischung 10 % bis 90 % PIR aufweist
und wobei die Mischung vorzugsweise 20 % bis 80 % PIR aufweist.

7. Verfahren nach Anspruch 1, wobei der Schritt des Schmelzverarbeitens bei Temperaturen durchgeführt wird, die von 160 °C bis 240 °C reichen.

## Revendications

1. Procédé de formation d'un film thermoplastique durable, le procédé comprenant :
la formation d'un mélange en fournissant un polymère vierge comprenant une polyoléfine et un matériau post-industriel recyclé (PIR) dans une section d'alimentation d'une extrudeuse, où le PIR comprend un polymère élastomère thermoplastique et un composant filé-lié ;
le traitement en fusion du mélange à l'intérieur de l'extrudeuse et l'extrusion du mélange à travers une filière pour former le film, où le film a une épaisseur de 100 micromètres ou moins.

2. Procédé selon la revendication 1, dans lequel le polymère élastomère thermoplastique est un copolymère séquencé styrénique thermoplastique.

3. Procédé selon la revendication 1, dans lequel la polyoléfine est du polyéthylène, du polypropylène et des copolymères d'éthylène ou de propylène avec d'autres comonomères vinyliques, et de préférence
dans lequel la polyoléfine est choisie dans le groupe constitué par le polyéthylène basse densité, le polyéthylène basse densité linéaire, le polyéthylène haute densité, le polypropylène, les copolymères éthylène-propylène, l'acatate d'éthylène-co-vinyle (EVA), l'éthylène-co-acrylate de méthyle (EMA), l'acide éthylène-co-acrylique (EAA), l'éthylène-co-méthacrylique (EMAA).

4. Procédé selon la revendication 1, dans lequel le polymère élastomère thermoplastique est choisi dans le groupe constitué par un copolymère séquencé polystyrène/poly(éthylène-butylène)/polystyrène ; un copolymère linéaire tri-bloc à base de styrène, éthylène/butylène et polystyrène ; un copolymère séquencé styrène-butadiène-styrène, un copolymère séquencé styrène-isoprène-styrène, polyuréthane, élastomères polyoléfiniques et leurs combinaisons.

5. Procédé selon la revendication 1, dans lequel le polymère élastomère thermoplastique a un poids moléculaire moyen d'environ 65 000 g/mol à environ 100 000 g/mol.

6. Procédé selon la revendication 1, dans lequel le mélange comprend 10 à 90 % de PIR,
et de préférence dans lequel le mélange comprend 20 à 80 % de PIR.

7. Procédé selon la revendication 1, dans lequel l'étape de traitement en fusion est effectué à des températures allant de 160 °C à 240 °C.
